# EUROPEAN PATENT SPECIFICATION

(11) **EP 1 965 671 B1**
(45) Date of publication and mention of the grant of the patent: **22.05.2013**
(21) Application number: 06840962.2
(22) Date of filing: 07.12.2006
(51) Int. Cl.: A23L 1/40, A23L 1/00

(54) **CONCENTRATE FOR PREPARING A BOUILLON, SOUP, SAUCE, GRAVY OR FOR USE AS A SEASONING, THE CONCENTRATE COMPRISING PARTICULATES AND GELATIN AND STARCH**
KONZENTRAT ZUR HERSTELLUNG EINER BOUILLON, SUPPE, SAUCE, BRATENSAUCE ODER ALS WÜRZE, WOBEI DAS KONZENTRAT GELATINE UND STÄRKE ENTHÄLT
CONCENTRÉ PERMETTANT DE PRÉPARER UN BOUILLION, UNE SOUPE, UNE SAUCE, UN JUS OU À UTILISER COMME ASSAISONNEMENT, LE CONCENTRÉ COMPRENANT DES PARTICULES ET DE LA GÉLATINE ET DE L'AMIDON

(30) Priority: 12.12.2005 EP 05077842; 07.06.2006 EP 06115093
(43) Date of publication of application: 10.09.2008
(73) Proprietor: Unilever N.V., 3013 AL Rotterdam (NL); Unilever PLC, London EC4Y 0DY (GB)
(72) Inventor: ACHTERKAMP, Georg, 74074 Heilbronn (DE); ACKERMANN, Dieter, Kurt, Karl, 74074 Heilbronn (DE); INOUE, Chiharu, NL-3133 AT Vlaardingen (NL); KOHLUS, Reinhard, 74074 Heilbronn (DE); KUHN, Matthias, 74074 Heilbronn (DE)
(74) Representative: Reijns, Tiemen Geert Pieter
(86) International application number: PCT/EP2006/011820
(87) International publication number: WO 2007/068402

(56) References cited:
- EP-A- 1 468 615
- WO-A-97/48290
- FR-A- 1 169 862
- US-A- 3 786 159
- US-A- 4 140 809
- US-A- 4 929 456
- US-A- 5 013 573
- US-A- 5 332 585
- US-A- 5 593 716
- US-A- 5 855 939
- US-A- 6 086 937
- US-A1- 2003 044 503

## Description

### Field of the invention

The present invention relates to concentrates for preparing a bouillon, broth, soup, sauce, gravy or for use as a seasoning. More in particular, the invention relates to such concentrates which allow the inclusion of herbs, vegetables, meat, fish or crustaceans which are not completely dry.

### Background of the invention

Concentrates for preparing a bouillon, broth, soup, sauce, gravy, or for use as seasoning are well known in the western and non-western cooking. For brevity, such formulations are herein all abbreviated to "concentrates for preparing a bouillon or for use as a seasoning".

Conventionally, bouillon and seasoning cubes or tablets comprise ingredients such as one or more of salt, sugar, flavour enhancers (like e.g. monosodium glutamate, MSG), herbs, spices, vegetable particulates, colourants and flavourants, next to e.g. 0-40% (for seasoning cubes 1-60%, for seasonings and bouillon cubes typically 0-20%) fat and/or oil. Salt is usually an ingredient which is present in large amounts, e.g. 5-60%.

Such concentrates are conveniently available in the form of rigid or plastic (i.e. deformable) cubes, tablets, crumbly cubes, or as powders, granules, etcetera. These formulations are known as being dry: a moisture content of less than 8%, usually even lower.

Although such dry formulations have advantages in terms of e.g. preservation, they do require all the ingredients to be dry. If ingredients used in such concentrates are not directly available in a dry form (e.g. herbs and vegetables and pieces thereof, pieces of meat), such ingredients need to be dried first. Needless to say, such is both a hassle as well as that it can have a negative impact on the quality of (pieces of) such herbs, vegetables and meat. Hence, there is a need for concentrates for use as seasoning or for preparing a bouillon, broth, soup, sauce, or gravy, which concentrate would allow the use of ingredients, such as for example herbs and/or vegetables and/or fruits or particles thereof as well as pieces of meat, fish or crustaceans, to be in a not completely dry state, i.e. more than 8% (by weight of the fruits, meat, fish, crustaceans and particles thereof in the form of intermediate moisture-stabilised ingredients.

WO 2001/072148 discloses cooking aids which are composed of a meltable or dissolvable wall material, enclosing a fluid or pasty filling. Such liquid or pasty filling would allow the use of non-dry herbs and vegetable (particulates) in its filling. However, the manufacture of such filled cubes can be cumbersome.

JP 61/031,068 discloses soup concentrates for use with instant noodles, which soup concentrate is in the form of a jelly, which concentrate needs to be dilluted 5-6 times with water to yield a soup to be consumed or served with noodles. Said jellies are formed with gelatin in combination with one or more of alginate, agar and apple puree. The jellies take 3-6 minutes to dissolve. The jellies in this reference can include meat (pieces) and vegetable (pieces). Although this jelly form allows for non-dry particulates, the jellies disclosed have some disadvantages.

US2003/0044503 relates to a composite food having a gelling agent, and a flavouring and/or texturing component. The composite food product is substantially solid and self-sustaining at ambient temperature. US2003/0044503 further relates to a method for preparing a flavoured and/or textured food item for service by providing a servable portion of an optionally cooked food item, removing a servable portion of the self-sustainable food product from the food product, contacting the servable food portion with the servable food item portion to form a flavoured and/or textured food item combination, normally arranged with the product on top of the food item, and optionally heating the flavoured and/or textured food item combination to prepare the food item for service. The examples show a garlic butter, a barbeque composition and cheddar cheese. This document does not relate to a concentrated product with a high salt content.

US-A-6 086 937 relates to a composition, preferably fat continuous, of a scoopable or spoonable consistency for the preparation of sauces. A gel is not disclosed and this document is silent about a relatively high salt content.

US-A-4 929 456 relates to a process for preparing a melting tolerant portion controlled sauce and seasoning particulate. A gel has not been disclosed and this document is silent about a high salt content.

FR 1169862 and WO 97/48290 disclose concentrates that have various theological properties.

### Summary of the invention

There is a need for packaged concentrates for use as seasoning or for preparing a bouillon, broth, soup, sauce, or gravy, which concentrate is in the form of a (packaged) jelly, which jelly can dissolve in boiling water fairly quickly (e.g. a mass of 30 g would dissolve in 900 ml boiling water in less than 3.5 minutes, preferably less than 3 minutes). It is also preferred that such jelly has a low tendency to syneresis (water separation) and is preferably an elastic, not too rigid gel (as such will facilitate removal from its packaging; elastic and not too rigid can best be judged by hand-feel). Also it is desired that such gel is easy to be manufactured (e.g. not too viscous in preparation, or requiring more complex equipment or processing). Preferably, the concentrates should be such that they allow the usual dilution rates (in e.g. an aqueous liquid such as water) for e.g. bouillons (e.g. as in bouillon cubes) like 1:20-1-50 (i.e. allows for high salt levels in the gel). Also, the product should be fairly stable in transport and storage, which is normally at ambient temperatures, but during which temperatures can rise substantially higher. Preferably, the gel should also have a certain strenghth: preferably the strength should be such that the force (in gram) necessary for a plunger to penetrate 10 mm in a gel is above 50, preferably above 70 g. Also low to no phase separation is desired.

It has now been found that such may be achieved (at least in part) by a packaged concentrate for preparing a bouillon, broth, soup, sauce, gravy or for use as a seasoning, said concentrate comprising:

It has now been found that such may be achieved (at least in part) by a packaged concentrate for preparing a bouillon, broth, soup, sauce, gravy or for use as a seasoning according to claim 1.

The person of average skill in the art of food products recognizes a gel when he or she sees one. The appearance of a gel generally can be achieved in an aqueous environment when sufficient gelling agents are used in the formulation. A gel will usually have a smooth surface appearance, be shape-retaining at ambient temperature when exposed to gravity, but easily deformable (to some degree in an elastic way). More preferably, the packaged concentrate according to the invention (when taken out of the packaging) has the appearance or rheology of a gel as expressed by a ratio of elastic modulus G' : viscous modulus G" of at least 1, preferably at least 3, more preferably at least 5. It can furthermore be preferred that the viscous modulus G" is at least 10 Pa, preferably at least 50 Pa. The method of measuring such is described below.

With "herbs, vegetables, fruits, meat, fish, crustaceans, or particulates thereof" is meant particles having a size such that they are at least visible to the naked eye, in the product as consumed, e.g. upon dillution with water in the required dillution rate (as that is when the particulates or herbs etcetera matter: to be seen just prior to consumption). Thus, "meat powder" as known in the bouillon industry can be difficult to be seen in the jelly cube (e.g. due to the concentration, possible turbidity following certain ingredients), but such conventional meat powder particulates are well visible to the naked eye in the soup or bouillon when prepared in the proper dillution.

Water (as amount) is herein to be understood as the total amount of moisture present. The concentration of salt is to be calculated as (amount of salt) / (amount of salt + total moisture). The same is true for other dissolved matter, such as gelling system (amount of gelling system / (amount of gelling system + total moisture amount).

It can be preferred that the concentrate according to the present invention comprises 15-30 % (by weight, based on total water content, more preferably 15-26%) salt (preferably NaCl, but also including other salts, preferably in dissolved form). "Salt" in this context can be sodium chloride but it can also be another alkali metal salt such as potassium chloride, or a mixture thereof, or other low-sodium products that aim for the taste impression of sodium chloride, as long as the taste in the end formulation (e.g. bouillon, or seasoned food product) is acceptable. The upper limit of solubility in water of NaCl is around 26% (at room temperature), and hence above this limit some salt crystals may occur. Hence, the amount of salt is preferably (just) below this salt saturation concentration level.

By the above formulation, concentrates for preparing a bouillon, broth, soup, sauce, gravy or for use as a seasoning can be obtained that are different from the conventionally used dry cubes and tablets, in that the concentrates according to the invention are not dry. It allows the use of herbs, vegetables, meat, fish, crustaceans (or particulates thereof) which are partially wet, i.e. not completely dried. What it shares with conventional bouillon cubes and tablets is that it comes in a unit dose format (i.e. not a bulk product like liquid, powder or granules): a portioned amount, individually packaged.

Notwithstanding the fact that the concentrate according to the present invention allows the use of (piece of) herbs, vegetables, meat, fish, crustaceans which are not dry, it is also possible to include such ingredients in dry form in the concentrate according to the present invention. Such dry ingredients may then be to some extent hydrated by the moisture present in the concentrate.

The concentrates are more or less shape stable: it is not an easily flowable product, but it being a gelled product means it can deform (easily) under pressure. By choosing the amount and ratio of starch and gelatin the desired rheology can be obtained.

The amount and ratio of starch and gelatin as required will e.g. depend on the amount of salt in the formulation, and such amounts and ratio can be determined by the person of average skill in the art of gelled food products without undue burden. At high salt levels, e.g. above 15%, it is difficult if not impossible to get gels with the desired properties (in terms of e.g. dissolution speed, syneresis, and gel strength) by using starch or gelatin on their own. It was found that in combination such is possible. Preferred amounts will be:
starch: 1-7%, more prefeferably: 3-6%
gelatin: 6-20%, more preferably 12-20%.
both as wt% on the amount of water as defined above.
The gelatin used is preferably 125-275 Bloom gelatin, more preferably 150-260 Bloom gelatin, even more preferably 160-240 Bloom gelatin. The starch used is preferably native starch, and also is preferably potato starch or corn starch.

The texture or rheologie desired for the product according to the invention is preferably that of a gel. Regarding a gel, in scientific literature, e.g. "Das Rheologie Handbuch, Thomas Mezger, Curt R. Vincentz-Verlag, Hannover, 2000" a gel is typically defined by its ratio of elastic modulus G' to viscous modulus G". This allows it to distinguish between a highly viscous fluid, e.g. a paste and an elastic system of same viscosity e.g. a jelly. This ratio should be greater than 1 for a gel. For the given product, a ratio of greater than 1 is suitable. It is preferred, however, that said ratio is gerater than 3, more preferably it is gerater than 5.

The absolute value of the viscous modus G" is preferably greater than 10 Pa, more preferred greater than 50 Pa. This criterion distinguishes between thin solutions with gel character and a more shape retaining jelly products that are the intended products according to this invention.

The above given values need should be measured under the following circumstances:
- a maturation time of at least 12 h under ambient conditions,
- measurement temperature of 25 °C,
- an oscillatory frequency of 1 rad/s and
- a strain of 1%.
This set of parameters refers to a standard oscillatory test conducted with a standard state of the art low deformation rheometer as commercially available from e.g. Bohlin or TA Instruments.

The requirements as stated herein for G' : G" should preferably apply to the whole concentrate (apart from the particulates mentioned), and not just for a part of it. For example, for a construction like in WO 01 /72148 such may be true for the wall material, but not for the fluid or pasty core. Also, it is preferred that the concentrate does not consist of a solid envelope material covering core. It can also be preferred that the concentrate is translucent and/or transparent, apart from the visual elments like herbs, vegetables, meat, fish, crustaceans (or particulates thereof). Hence, of the matrix material (e.g. comprising water, a gelling agent, and optionally salt, taste enhancers, oil) further comprising the visual elments like herbs, vegetables, meat, fish, crustaceans (or particulates thereof), the matrix material is preferably transparent and/or translucent.

The concentrate according to the invention is preferably non-sweet, which is characterised by a sweetness as an equivalent to a percentage sucrose of lower than 20%, preferably lower than 15%, even more preferably lower than 10%, most preferably lower than 6%, and resulting in an end-product that is lower in sweetness than 0.5g/l of sucrose equivalent, preferably below 0.3 g/l of sucrose equivalent, more preferably below 0.2 g/l of sucrose equivalent. The sweetness refers to an equivalent sweetness to sucrose that is calculated via the sweetness index of the used sweeteners. Thus, the concentrate according to the invention has a sweetness as expressed by a sweetness index of below 0.5 g / litre sucrose equivalent, preferably below 0.3 g/l of sucrose equivalent, more preferably below 0.2 g/l of sucrose equivalent. The equivalent amount to sucrose refers to an equivalent sweetness to sucrose as it is calculated via the sweetness index of the used sweeteners.

As used herein, "sweetness index" is a term used to describe the level of sweetness of the dosage form relative to sucrose. Sucrose, defined as the standard, has a sweetness index of 1. For example, the sweetness indices of several known sweet compounds are listed below:
Sorbitol 0.54-0.7, Dextrose 0.6, Mannitol 0.7, Sucrose 1.0, High Fructose Corn Syrup 55% 1.0, Xylitol 1.0, Fructose 1.2-1.7, Cyclamate 30, Aspartame 180, Acesulfame K 200, Saccharin 300, Sucralose 600, Talin 2000-3000. Further values and reference literature can be found e.g. in "Römpp Lebensmittelchemie, Georg Thieme Verlag, 1995".

It can also be preferred that by equivalent sweetness is herein understood the perceived sweetness by a consumer as determined by a trained panel matching the product sweetness to a standard sucrose solution. The detailed method is described in the appropriate DIN standard. For recipe design purposes this shall be assumed similar to the sweetness as calculated by the so called sweetness index.

The herbs, vegetables, meat, fish, crustaceans, or particulates thereof (including mixtures thereof) as applied in the current invention can be intermediate moisture components. Typically, intermediate moisture ingredients will have a water activity a_{w} of 0.5-0.98, preferably 0.6-0.87, more preferably 0.6-0.75.

### Detailed description of the invention

In the concentrates according to the present invention the amount of herbs, vegetables, fruits, meat, fish, crustaceans, or particulates thereof is preferably 1-40%, more preferably 1-20%, most preferably 2-20% (by weight on the total packed concentrate).

The total moisture content of the total concentrate according to the present invention as it is in the packaging (i.e. including the particulates of herbs, vegetables, meat, fish, crustaceans) is 20-80% (by weight, based on total packed concentrate), preferably 40 to 60 % by weight (based on the total packed concentrate). The water activity a_{w} of the total concentrate as it is in the packaging is preferably preferably 0.5-0.98, more preferably 0.6-0.87, even more preferably 0.7-0.8, and most preferably 0.7-0.75. The pH of the total concentrate according to the invention is preferably between 3 and 8, more preferably 4-7. Such pH can be measured after e.g. finely grinding the whole concentrate. In connection to this, it may be preferred that (organic) acids are present. Such may also be the case for taste reasons.

The concentrate according to the present invention is preferably shelf stable when in its intact packaging. This can be ensured by selecting the appropriate manufacturing process in combination with a correct composition. For example, a process involving a pasteurising step (either explicitly or as part of other process steps), followed by hot or aseptic filling of packaging, and the right water activity a_{w} and pH of the composition may ensure such.

Depending on the ingredients and processing chosen, the concentrate according to the present invention is shelf stable for at least 3 months when in its intact packaging at ambient temperature. Preferably, the concentrate according to the present invention has an open shelf life of at least 3 months at ambient temperature. This can be achieved at high salt levels, e.g. at 20-26% salt (on water basis). Hence, such salt level can be preferred.

Next to the ingredients mentioned, it may be preferred for the concentrates according to the present invention that they further comprise 0.5 - 30 % (weight on total concentrate) of a taste emulsifers and/or stabilisers may be desired. Hence, it may be preferred that the concentrate according to the present invention further comprises 1-30% (weight on total packaged concentrate) of emulsified or dispersed oil and/or fat, preferably 1-15%.

As the concentrates are jelly-like, they can have a shape. Preferably, the concentrate according to the invention is in the form of a cube, tablet, brick-shape, pellet, ball (sphere), briquette, dragee, egg-shape, or flattened egg-shape. It is herein to be understood that "cubes or tablets" and "unit dose" encompass a wide variety of geometric shapes: next to cubes and tablets also pellets, briquettes, brick-like shapes, etcetera. Each individual gelled concentrate preferably is of a size such that the concentrate has a weight (excluding packaging) of 1g-10 kg, preferably 2-250 g, more preferably 10-50 g. The portion of the concentrate according to the present invention as packaged is preferably such that the concentrate has a weight excluding packaging) of 1g-10 kg, preferably 2-250 g, more preferably 10-50 g. The packaging can be e.g. a blister pack or a glass or plastic jar or (sealed) tubs or cups. Preferably, in the packaged concentrate according to the invention the container is a cup or tub with a seal, but also more complex packaging shapes are now possible (e.g. a reclosable pack). A specific and preferred packaging option are sealed or reclosable cups or tubs (e.g. plastic cups e.g. having a volume of 1-250 ml, comprising 1-250 g, preferably 2-50 g (more preferably 10-50 g) concentrate, which are closed with a lid or seal, preferably a seal of sheet-like material).

The packaged concentrates according to the present invention are preferably translucent or transparent. This can also make it attractive to choose e.g. packaging which is at least partially transparent.

The invention further relates to a process for the preparation of the concentrates according to the present invention. A process for the preparation may comprise the steps of mixing the ingredients with the water, filling into the packaging (e.g. blister packs or cups or tubs) and closing the packs (e.g. by a seal), whereby preferably a heating step is applied prior to, during or after filling into the packaging, for preservation purposes and/or to facilitate dissolution of ingredients and/or achieving gelation (upon cooling thereafter) of thermoset gels. Alternatively, the (heated) mixture may be poured in moulds, cooled to set. After setting to a gel, the gelled concentrate will have to be removed from the moulds and packaged. It is preferred, however, to manufacture directly into the packaging. It is preferred that the steps of mixing the ingredients with the water, filling into the packaging and closing the packaging, whereby a heating step is applied prior to, and/or during and/or after filling into the packaging. closing the packs (e.g. by a seal), whereby preferably a heating step is applied prior to, during or after filling into the packaging, for preservation purposes and/or to facilitate dissolution of ingredients and/or achieving gelation (upon cooling thereafter) of thermoset gels. Alternatively, the (heated) mixture may be poured in moulds, cooled to set. After setting to a gel, the gelled concentrate will have to be removed from the moulds and packaged. It is preferred, however, to manufacture directly into the packaging. It is preferred that the steps of mixing the ingredients with the water, filling into the packaging and closing the packaging, whereby a heating step is applied prior to, and/or during and/or after filling into the packaging.

In the above process, it is preferred that at least part of the heating stage is to a temperature of at least 80°C. Also, it is preferred that the temperature of the mixture during the filling is at least 70°C. When fat is used solid at room temperature, it is preferably melted first before adding to other components.

The invention further relates to the use of a concentrate as set out above, for preparing a bouillon, broth, soup, sauce, gravy or for use as a seasoning. This may be done by diluting with an aqueous liquid (e.g. water) under application of heat, in e.g. a ratio of 1:15- 1: 100, preferably 1:20 - 1:70, more preferably 1:20 - 1:50.

The invention further relates to the use of the concentrate according to the present invention and as set out above for preparing a bouillon, broth, soup, sauce, gravy or for use as a seasoning. Such use e.g. implies removing the concentrate from its packaging, and adding it to food or a dish, either during or after its preparation, optionally further applying heat and/or stirring the food or dish with such concentrate.

### Examples

### Example 1a

A dry mix was prepared comprising:
Pork fat, 690 g
Salt, 580 g
Pork meat powder, 530 g
Sugar, 200 g
MSG, 120 g
Pork flavour (dissolvable powder), 60 g

The above mixture was made in a gel with 2300 g water, 450 g gelatin 160 Bloom, 110 g potato starch. This gel (at 20% salt on water) had a gel strength of approx. 240 g (measured with the method below for model systems) and dissolved in less than 100 seconds (30 g gel immersed in 900 g boiling water).

### Processing:

### Process Description:

1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water into the vessel and close the vessel.
6. Heat up to 90°C while stirring
7. Keep at 90°C for 3min while stirring
8. Hot filling into containers, followed by sealing and leaving to cool to room temperature

### Example 1 b

The same dry mix as under 1a was now gelled with 2300 g water, 450 g gelatin 160 Bloom and 110 g corn starch. This gel (at 20% salt on water) had a gel strength of approx. 260 g (measured with the method below for model systems) and dissolved in less than 100 seconds (30 g gel immersed in 900 g boiling water).

### Example 1c

The same dry mix as under 1a was now gelled with 2300 g water, 450 g gelatin 240 Bloom and 110 g corn starch. This gel (at 20% salt on water) had a gel strength of approx. 350 g (measured with the method below for model systems) and dissolved in less than 100 seconds (30 g gel immersed in 900 g boiling water).

### Example 1d

The same dry mix as under 1 a was now gelled with 2300 g water, 450 g gelatin 240 Bloom and 110 g potato starch. This gel (at 20% salt on water) had a gel strength of approx. 300 g (measured with the method below for model systems) and dissolved in less than 100 seconds (30 g gel immersed in 900 g boiling water).

All examples 1a-1d had no to very low syneresis.

The gel strength was measured using the following method:
- using a texture analyser from Microstable Sytems, model TA XT2 with 5 kg load cell.
- Plunger: Diameter (according AOAC method) 0.5 inches means 12.7 mm, height 35 mm, plane surface, sharp edges, material plastics.
- Sample Containers have an influence on results if not very large. Therefore the choosen container should always be the same. We have used plastic containers for model systems (diameter bottom 5.5 cm; diameter top 6.5 cm; height 8.5 cm) and glass jars for process trials with recipes other than model systems (diameter 7 cm; height 4 cm).
- After preparation, samples have been stored at ambient conditions (21°C) at least over night before measurement.
- TA-Parameters: Pre speed 1 mm/s, Test speed 0.5 mm/s, Re speed 10 mm/s, Distance 15 mm, Trigger Auto, Force 0.5 g, Stop recording at target. Result we take from the recorded graph is force at 10 mm penetration depth (should be in N, but simplified in g).

## Claims

1. Packaged concentrate for preparing a bouillon, broth, soup, sauce, gravy or for use as a seasoning, said concentrate comprising:
- 20-80% water weight % based on total packaged concentrate,
- 0.5-60% by weight of herbs, vegetables, fruits, meat, fish, crustaceans, or particulates thereof, weight % based on total packaged concentrate,
- a gelling system comprising the combination of starch in an amount of 0.1 % to 10% weight % based on water content of concentrate, preferably 1-7%, more preferably 3-6% and gelatin in an amount of 1.5-30% weight % based on water content of concentrate, preferably 6-20%, more preferably 12-20%, whereby the concentration of gelling system is to be calculted as (amount of gelling system) / (amount of gelling system + total moisture),
- 15-30% weight % based on water content of concentrate, more preferably 15-26% of salt, whereby the concentration of salt is to be calculated as (amount of salt) / (amount of salt + total moisture),
wherein the concentrate has the appearance of a gel.

2. Concentrate according to claim 1, wherein the concentrate has the rheology of a gel.

3. Concentrate according to claim 1-2, wherein wherein the concentrate has the appearance or rheology of a gel as expressed by the ratio of elastic modulus G' : viscous modulus G" of at least 1, preferably at least 3.

4. Concentrate according to claim 1-3, wherein viscous modulus G" is at least 10 Pa.

5. Concentrate according to claim 4, wherein the viscous modulus G" is at least 50 Pa.

6. Concentrate according to claim 1-5, wherein the gelatin used is 125-275 Bloom gelatin, preferably 150-260 Bloom gelatin.

7. Concentrate according to claim 1-6, wherein the starch is native starch.

8. Concentrate according to claim 1-7, wherein the starch is potato starch or corn starch.

9. Concentrate according to claim 1-8, wherein the total moisture content of the concentrate is 40-60% by weight based on the total packed concentrate .

10. Concentrate according to claim 1-9, wherein the concentrate has a water activity a_{w} of 0.6 to 0.87, preferably 0.7-0.8.

11. Concentrate according to claim 1-10, further comprising 0.5 to 30% weight on total concentrate of a taste enhancer selected from the group of monosodium glutamate, 5'-ribotides, organic acids, or mixtures thereof.

12. Concentrate according to claim 1-11, further comprising 1-30%, preferably 1-15% weight on total packaged concentrate of emulsified oil and/or fat.

13. Concentrate according to claim 1-12, wherein the concentrate is in the form of a cube, tablet, pellet, ball, briquette, dragee.

14. Concentrate according to claim 1-13, wherein the concentrate is packaged in a cup or tub with a seal.

15. Concentrate according to claim 1-14, wherein the portion of the concentrate as packaged is such that the concentrate has a weight excluding packaging of 10g-10 kg.

16. Concentrate according to claim 1-15, wherein the concentrate provides a bouillon, broth, soup, sauce, gravy by diluting said concentrate with an aqueous liquid under application of heat, preferably in a ratio of 1:15 - 1: 50.

17. Concentrate according to claim 1-16, whereby 30 g of the concentrate dissolves in 900 ml boiling water in less than 3.5 minutes, preferably less than 3 minutes.

18. Concentrate according to claim 1-17, wherein the concentrate is a concentrated bouillon.

19. Concentrate according to claim 18, wherein the concentrated bouillon provides a bouillon by diluting said concentrated bouillon with an aqueous liquid under application of heat, said concentrated bouillon comprising:
- 20-80% water weight % based on total packaged concentrate,
- 0.5-60% by weight of herbs, vegetables, fruits, meat, fish, crustaceans, or particulates thereof, weight % based on total packaged concentrate,
- a gelling system comprising the combination of starch in an amount of 1 % to 7% weight % based on water content of concentrate, preferably 3-6% and gelatin in an amount of 6-20% weight % based on water content of concentrate, more preferably 12-20%,
whereby the concentration of gelling system is to be calculated as (amount of gelling system) /(amount of gelling system + total moisture),
- 15-30% weight % based on water content of concentrate, more preferably 15-26% of salt, whereby the concentration of salt is to be calculated as (amount of salt) / (amount of salt + total moisture),
and wherein the concentrate has the appearance of a gel, as expressed by a ratio of elastic modulus G' : viscous modulus G" of at least 1,
and wherein the portion of the concentrate as packaged is such that the concentrate has a weight excluding packaging of 10g-10 kg.

20. Concentrate according to claim 19 further comprising 1-30%, preferably 1-15%, weight on total packaged concentrate of emulsified oil and/or fat.

21. Concentrate according to claim 19 or 20, wherein the concentrated bouillon provides a bouillon by diluting said concentrated bouillon with an aqueous liquid under application of heat in a ratio of 1:15 - 1: 50.

22. Process for preparing a concentrate for preparing a bouillon, broth, soup, sauce, gravy or for use as a seasoning, said concentrate comprising:
● 20-80% water weight % based on total packaged concentrate,
● 0.5-60% by weight of herbs, vegetables, fruits, meat, fish, crustaceans, or particulates thereof, weight % based on total packaged concentrate,
● a gelling system comprising the combination of starch in an amount of 0.1 % to 10% weight % based on water content of concentrate, preferably 1-7%, more preferably 3-6%, and gelatin in an amount of 1.5-30%, weight % based on water content of concentrate, preferably 6-20%, more preferably 12-20%, whereby the concentration of gelling system is to be calculated as (amount of gelling system) / (amount of gelling system + total moisture),
● 15-30% weight % based on water content of concentrate, more preferably 15-26% of salt, whereby the concentration of salt is to be calculated as (amount of salt) / (amount of salt + total moisture),
wherein the concentrate has the appearance of a gel, the process comprising the steps of mixing the ingredients with the water, filling into the packaging and closing the packs, whereby preferably a heating step is applied prior to, during or after filling into the packaging.

23. Process according to claim 22, wherein at least part of the heating stage is to a temperature of at least 70°C.

24. Use of a concentrate according to claim 1-21, for preparing a bouillon or soup.

25. Use according to claim 24, wherein the concentrate is a concentrated bouillon and provides a bouillon by diluting said concentrated bouillon with an aqueous liquid under application of heat, said concentrated bouillon comprising:
- 20-80% water weight % based on total packaged concentrate
- 0.5-60% by weight of herbs, vegetables, fruits, meat, fish, crustaceans, or particulates thereof, weight % based on total packaged concentrate
- a gelling system comprising the combination of starch in an amount of 1-7% weight % based on water content of concentrate, more preferably 3-6% and gelatin in an amount of 6-20%, weight % based on water content of concentrate, more preferably 12-20%, whereby the concentration of gelling system is to be calculated as (amount of gelling system) / (amount of gelling system + total moisture),
- 15-30% weight % based on water content of concentrate, more preferably 15-26% of salt, whereby the concentration of salt is to be calculated as (amount of salt) / (amount of salt + total moisture),
and wherein the concentrate has the appearance of a gel, as expressed by a ratio of elastic modulus G' : viscous modulus G" of at least 1,
and wherein the portion of the concentrate as packaged is such that the concentrate has a weight excluding packaging of 10g- 250g.

26. Use according to claim 25 wherein the concentrated bouillon further comprises 1-30%, preferably 1-15%, weight on total packaged concentrate, of emulsified oil and/or fat.

27. Use according to claim 25 or 26, wherein the concentrated bouillon provides a bouillon by diluting said concentrated bouillon with an aqueous liquid under application of heat in a ratio of 1:15 - 1:50.

28. Method for preparing a bouillon comprising the step of diluting a concentrate according to any one of claims 1 to 21 whereby said concentrate is diluted with an aqueous liquid under application of heat.

29. Method according to claim 28 whereby said concentrate is diluted in a ratio of 1:15 - 1: 50.

## Patentansprüche

1. Abgepacktes Konzentrat für die Herstellung einer Bouillon, Brühe, Suppe, Soße, Bratensoße oder für die Verwendung als Würze, wobei das Konzentrat Folgendes aufweist:
- 20 bis 80 Gew.-% Wasser, und zwar auf das gesamte abgepackte Konzentrat bezogen,
- 0,5 bis 60 Gew.-% Kräuter, Gemüse, Früchte, Fleisch, Fisch, Krustentiere oder Teilchen davon, und zwar auf das gesamte abgepackte Konzentrat bezogen,
- ein Geliersystem, das eine Kombination von Stärke in einer Menge von 0,1 bis 10 Gew.-%, und zwar auf den Wassergehalt des Konzentrats bezogen, vorzugsweise von 1 bis 7 Gew.-%, stärker bevorzugt von 3 bis 6 Gew.-%, und Gelatine in einer Menge von 1,5 bis 30 Gew.-%, und zwar auf den Wassergehalt des Konzentrats bezogen, vorzugsweise von 6 bis 20 Gew.-%, stärker bevorzugt von 12 bis 20 Gew.-% aufweist, wobei die Konzentration des Geliersystems als (Menge des Geliersystems)/(Menge des Geliersystems + gesamte Feuchtigkeit) zu berechnen ist,
- 15 bis 30 Gew.-%, und zwar auf den Wassergehalt des Konzentrats bezogen, stärker bevorzugt 15 bis 26 Gew.-% Salz, wobei die Salzkonzentration als (Salzmenge)/(Salzmenge + gesamte Feuchtigkeit) zu berechnen ist,
wobei das Konzentrat das Aussehen eines Gels hat.

2. Konzentrat nach Anspruch 1,
wobei das Konzentrat das Fließverhalten eines Gels hat.

3. Konzentrat nach Anspruch 1 und 2,
wobei das Konzentrat das Aussehen oder das Fließverhalten eines Gels hat, und zwar als das Verhältnis von Elastizitätsmodul G' : Viskositätsmodul G" von mindestens 1, vorzugsweise mindestens 3 angegeben.

4. Konzentrat nach den Ansprüchen 1 bis 3,
wobei der Viskositätsmodul G" mindestens 10 Pa beträgt.

5. Konzentrat nach Anspruch 4,
wobei der Viskositätsmodul G" mindestens 50 Pa beträgt.

6. Konzentrat nach den Ansprüchen 1 bis 5,
wobei die verwendete Gelatine Gelatine mit einem Bloomwert von 125 bis 275, vorzugsweise Gelatine mit einem Bloomwert von 150 bis 260 ist.

7. Konzentrat nach den Ansprüchen 1 bis 6,
wobei die Stärke natürliche Stärke ist.

8. Konzentrat nach den Ansprüchen 1 bis 7,
wobei die Stärke Kartoffelstärke oder Maisstärke ist.

9. Konzentrat nach den Ansprüchen 1 bis 8,
wobei der gesamte Feuchtigkeitsgehalt des Konzentrat 40 bis 60 Gew.-% beträgt, und zwar auf das gesamte abgepackte Konzentrat bezogen.

10. Konzentrat nach den Ansprüchen 1 bis 9,
wobei das Konzentrat eine Wasseraktivität a_{w} von 0,6 bis 0,87, vorzugsweise von 0,7 bis 0,8 hat.

11. Konzentrat nach den Ansprüchen 1 bis 10,
das ferner 0,5 bis 30 Gew.-%, und zwar auf das gesamte Konzentrat bezogen, eines Geschmacksverstärkers aufweist, der aus der Gruppe von Mononatriumglutamat, 5'-Ribotiden, organischen Säuren oder Gemischen davon ausgewählt ist.

12. Konzentrat nach den Ansprüchen 1 bis 11,
das ferner 1 bis 30, vorzugsweise 1 bis 15 Gew.-%, und zwar auf das gesamte abgepackte Konzentrat bezogen, eines emulgierten Öls und/oder Fetts aufweist.

13. Konzentrat nach den Ansprüchen 1 bis 12,
wobei das Konzentrat in der Form von einem Würfel, einer Tablette, Granulat, einer Kugel, einem Pressstück oder Dragee vorliegt.

14. Konzentrat nach den Ansprüchen 1 bis 13,
wobei das Konzentrat in einem Becher oder Schlauch mit einer Schweißnaht abgepackt ist.

15. Konzentrat nach den Ansprüchen 1 bis 14,
wobei die Portion des abgepackten Konzentrats derart ist, dass das Konzentrat ein Gewicht von 10 g bis 10 kg hat, wobei die Verpackung ausgenommen ist.

16. Konzentrat nach den Ansprüchen 1 bis 15,
wobei das Konzentrat durch Verdünnen des Konzentrats mit einer wässrigen Flüssigkeit, vorzugsweise in einem Verhältnis von 1:15 bis 1:50, unter Anwendung von Wärme eine Bouillon, Brühe, Suppe, Soße oder Bratensoße bereitstellt.

17. Konzentrat nach den Ansprüchen 1 bis 16,
wobei sich 30 g des Konzentrats in weniger als 3,5 Minuten, vorzugsweise weniger als 3 Minuten, in 900 ml kochendem Wasser lösen.

18. Konzentrat nach den Ansprüchen 1 bis 17,
wobei das Konzentrat eine konzentrierte Bouillon ist.

19. Konzentrat nach Anspruch 18,
wobei die konzentrierte Bouillon durch Verdünnen der konzentrierten Bouillon mit einer wässrigen Flüssigkeit unter Anwendung von Wärme eine Bouillon bereitstellt, wobei die konzentrierte Bouillon Folgendes aufweist:
- 20 bis 80 Gew.-% Wasser, und zwar auf das gesamte abgepackte Konzentrat bezogen,
- 0,5 bis 60 Gew.-% Kräuter, Gemüse, Früchte, Fleisch, Fisch, Krustentiere oder Teilchen davon, und zwar auf das gesamte abgepackte Konzentrat bezogen,
- ein Geliersystem, das eine Kombination von Stärke in einer Menge von 1 bis 7 Gew.-%, und zwar auf den Wassergehalt des Konzentrats bezogen, vorzugsweise von 3 bis 6 Gew.-%, und Gelatine in einer Menge von 6 bis 20 Gew.-%, und zwar auf den Wassergehalt des Konzentrats bezogen, stärker bevorzugt von 12 bis 20 Gew.-% aufweist, wobei die Konzentration des Geliersystems als (Menge des Geliersystems)/(Menge des Geliersystems + gesamte Feuchtigkeit) zu berechnen ist,
- 15 bis 30 Gew.-%, und zwar auf den Wassergehalt des Konzentrats bezogen, stärker bevorzugt 15 bis 26 Gew.-% Salz, wobei die Salzkonzentration als (Salzmenge)/(Salzmenge + gesamte Feuchtigkeit) zu berechnen ist,
und wobei das Konzentrat das Aussehen eines Gels hat, und zwar als Verhältnis von Elastizitätsmodul G' : Viskositätsmodul G" von mindestens 1 angegeben, und wobei die Portion des abgepackten Konzentrats derart ist, dass das Konzentrat ein Gewicht von 10 g bis 10 kg hat, wobei die Verpackung ausgenommen ist.

20. Konzentrat nach Anspruch 19,
das ferner 1 bis 30, vorzugsweise 1 bis 15 Gew.-%, und zwar auf das gesamte abgepackte Konzentrat bezogen, eines emulgierten Öls und/oder Fetts aufweist.

21. Konzentrat nach Anspruch 19 oder 20,
wobei die konzentrierte Bouillon durch Verdünnen der konzentrierten Bouillon mit einer wässrigen Flüssigkeit in einem Verhältnis von 1:15 bis 1:50 unter Anwendung von Wärme eine Bouillon bereitstellt.

22. Verfahren zum Herstellen eines Konzentrats für die Herstellung einer Bouillon, Brühe, Suppe, Soße, Bratensoße oder für die Verwendung als Würze, wobei das Konzentrat Folgendes aufweist:
- 20 bis 80 Gew.-% Wasser, und zwar auf das gesamte abgepackte Konzentrat bezogen,
- 0,5 bis 60 Gew.-% Kräuter, Gemüse, Früchte, Fleisch, Fisch, Krustentiere oder Teilchen davon, und zwar auf das gesamte abgepackte Konzentrat bezogen,
- ein Geliersystem, das eine Kombination von Stärke in einer Menge von 0,1 bis 10 Gew.-%, und zwar auf den Wassergehalt des Konzentrats bezogen, vorzugsweise von 1 bis 7 Ges.-%, stärker bevorzugt von 3 bis 6 Gew.-%, und Gelatine in einer Menge von 1,5 bis 30 Gew.-%, und zwar auf den Wassergehalt des Konzentrats bezogen, vorzugsweise von 6 bis 20 Gew.-%, stärker bevorzugt von 12 bis 20 Gew.-% aufweist, wobei die Konzentration des Geliersystems als (Menge des Geliersystems)/(Menge des Geliersystems + gesamte Feuchtigkeit) zu berechnen ist,
- 15 bis 30 Gew.-%, und zwar auf den Wassergehalt des Konzentrats bezogen, stärker bevorzugt 15 bis 26 Gew.-% Salz, wobei die Salzkonzentration als (Salzmenge)/(Salzmenge + gesamte Feuchtigkeit) zu berechnen ist,
wobei das Konzentrat das Aussehen eines Gels hat,
wobei das Verfahren die Schritte des Mischens der Bestandteile mit Wasser, des Einfüllens in die Verpackung und des Verschließens der Packungen aufweist, wobei vor, während oder nach dem Einfüllen in die Verpackung vorzugsweise ein Schritt des Erwärmens angewendet wird.

23. Verfahren nach Anspruch 22,
wobei zumindest ein Teil des Schritts des Erwärmens bis zu einer Temperatur von mindestens 70 °C geht.

24. Verwendung des Konzentrats nach den Ansprüchen 1 bis 21 für die Herstellung einer Bouillon oder Suppe.

25. Verwendung nach Anspruch 24,
wobei das Konzentrat eine konzentrierte Bouillon ist und durch Verdünnen der konzentrierten Bouillon mit einer wässrigen Flüssigkeit unter Anwendung von Wärme eine Bouillon bereitstellt, wobei die konzentrierte Bouillon Folgendes aufweist:
- 20 bis 80 Gew.-% Wasser, und zwar auf das gesamte abgepackte Konzentrat bezogen,
- 0,5 bis 60 Gew.-% Kräuter, Gemüse, Früchte, Fleisch, Fisch, Krustentiere oder Teilchen davon, und zwar auf das gesamte abgepackte Konzentrat bezogen,
- ein Geliersystem, das eine Kombination von Stärke in einer Menge von 1 bis 7 Gew.-%, und zwar auf den Wassergehalt des Konzentrats bezogen, vorzugsweise von 3 bis 6 Gew.-%, und Gelatine in einer Menge von 6 bis 20 Gew.-%, und zwar auf den Wassergehalt des Konzentrats bezogen, stärker bevorzugt von 12 bis 20 Gew.-% aufweist, wobei die Konzentration des Geliersystems als (Menge des Geliersystems)/(Menge des Geliersystems + gesamte Feuchtigkeit) zu berechnen ist,
- 15 bis 30 Gew.-%, und zwar auf den Wassergehalt des Konzentrats bezogen, stärker bevorzugt 15 bis 26 Gew.-% Salz, wobei die Salzkonzentration als (Salzmenge)/(Salzmenge + gesamte Feuchtigkeit) zu berechnen ist,
und wobei das Konzentrat das Aussehen eines Gels hat, und zwar als Verhältnis von Elastizitätsmodul G' : Viskositätsmodul G" von mindestens 1 angegeben, und wobei die Portion des abgepackten Konzentrats derart ist, dass das Konzentrat ein Gewicht von 10 bis 250 g hat, wobei die Verpackung ausgenommen ist.

26. Verwendung nach Anspruch 25,
wobei die konzentrierte Bouillon ferner 1 bis 30, vorzugsweise 1 bis 15 Gew.-%, und zwar auf das gesamte abgepackte Konzentrat bezogen, eines emulgierten Öls und/oder Fetts aufweist.

27. Verwendung nach Anspruch 25 oder 26,
wobei die konzentrierte Bouillon durch Verdünnen der konzentrierten Bouillon mit einer wässrigen Flüssigkeit in einem Verhältnis von 1:15 bis 1:50 unter Anwendung von Wärme eine Bouillon bereitstellt.

28. Verfahren zum Herstellen einer Bouillon,
das den Schritt des Verdünnens eines Konzentrats nach einem der Ansprüche 1 bis 21 aufweist, wobei das Konzentrat unter Anwendung von Wärme mit einer wässrigen Flüssigkeit verdünnt wird.

29. Verfahren nach Anspruch 28,
wobei das Konzentrat in einem Verhältnis von 1:15 bis 1:50 verdünnt wird.

## Revendications

1. Concentré sous emballage pour préparer un bouillon, un potage, une soupe, un fond de viande ou à utiliser comme assaisonnement, ledit concentré comprenant :
- 20-80 % d'eau, en % en poids sur la base du concentré sous emballage total,
- 0,5-60 % en poids d'herbes aromatiques, de légumes, de fruits, de viande, de poisson, de crustacés, ou de particules de ceux-ci, en % en poids sur la base du concentré sous emballage total,
- un système de gélification comprenant une combinaison d'amidon en une quantité de 0,1 à 10 %, en % en poids sur la base de la teneur en eau du concentré, de préférence 1-7 %, plus préférablement 3-6 %, et de gélatine en une quantité de 1,5-30 %, en % en poids sur la base de la teneur en eau du concentré, de préférence 6-20 %, plus préférablement 12-20 %, dans lequel la concentration du système de gélification doit être calculée en (quantité de système de gélification)/(quantité de système de gélification + humidité totale),
dans lequel le concentré a l'aspect d'un gel.

2. Concentré selon la revendication 1, dans lequel le concentré a la rhéologie d'un gel.

3. Concentré selon les revendications 1-2, dans lequel le concentré a l'aspect ou la rhéologie d'un gel, exprimé par un rapport module élastique G' :module visqueux G" d'au moins 1, de préférence d'au moins 3.

4. Concentré selon les revendications 1-3, dans lequel le module visqueux G" est d'au moins 10 Pa.

5. Concentré selon la revendication 4, dans lequel le module visqueux G" est d'au moins 50 Pa.

6. Concentré selon les revendications 1-5, dans lequel la gélatine utilisée est une gélatine 125-275 Bloom, de préférence une gélatine 150-260 Bloom.

7. Concentré selon les revendications 1-6, dans lequel l'amidon est un amidon natif.

8. Concentré selon les revendications 1-7, dans lequel l'amidon est un amidon de pomme de terre ou un amidon de maïs.

9. Concentré selon les revendications 1-8, dans lequel la teneur en humidité totale du concentré est de 40 à 60 % en poids sur la base du concentré sous emballage total.

10. Concentré selon les revendications 1-9, dans lequel le concentré a une activité d'eau a_{w} de 0,6 à 0,87, de préférence 0,7-0,8.

11. Concentré selon les revendications 1-10, comprenant en outre de 0,5 à 30 % en poids du concentré total d'un exhausteur de goût choisi dans le groupe du glutamate monosodique, des 5'-ribotides, des acides organiques, ou de leurs mélanges.

12. Concentré selon les revendications 1-11, comprenant en outre 1-30 %, de préférence 1-15 % en poids du concentré sous emballage total, d'une huile et/ou d'une graisse émulsifiée.

13. Concentré selon les revendications 1-12, dans lequel le concentré est sous la forme d'un cube, d'une tablette, d'une pastille, d'une bille, d'une briquette, d'une dragée.

14. Concentré selon les revendications 1-13, dans lequel le concentré est emballé dans une coupelle ou un tube doté(e) d'une fermeture hermétique.

15. Concentré selon les revendications 1-14, dans lequel la portion du concentré sous emballage est telle que le concentré a un poids hors emballage de 10 g à 10 kg.

16. Concentré selon les revendications 1-15, dans lequel le concentré donne un bouillon, un potage, une soupe, une sauce, un fond de viande par dilution dudit concentré avec un liquide aqueux sous application de chaleur, de préférence dans un rapport de 1:15-1:50.

17. Concentré selon les revendications 1-16, dans lequel une quantité 30 g du concentré se dissout dans 900 ml d'eau bouillante en moins de 3,5 minutes, de préférence en moins de 3 minutes.

18. Concentré selon les revendications 1-17, dans lequel le concentré est un bouillon concentré.

19. Concentré selon la revendication 18, dans lequel le bouillon concentré donne un bouillon par dilution dudit bouillon concentré avec un liquide aqueux sous application de chaleur, ledit bouillon concentré comprenant :
- 20-80 % d'eau, en % en poids sur la base du concentré sous emballage total,
- 0,5-60 % en poids d'herbes aromatiques, de légumes, de fruits, de viande, de poisson, de crustacés, ou de particules de ceux-ci, en % en poids sur la base du concentré sous emballage total,
- un système de gélification comprenant une combinaison d'amidon en une quantité de 1 à 7 %, en % en poids sur la base de la teneur en eau du concentré, de préférence 3-6 %, et de gélatine en une quantité de 6 à 20 %, en % en poids sur la base de la teneur en eau du concentré, plus préférablement 12 à 20 %, dans lequel la concentration du système de gélification doit être calculée en (quantité de système de gélification)/(quantité de système de gélification + humidité totale),
- 15-30 %, en % en poids sur la base de la teneur en eau du concentré, plus préférablement 15-26 % de sel, où la concentration de sel doit être calculée en (quantité de sel)/(quantité de sel + humidité totale),
et dans lequel le concentré a l'aspect d'un gel, exprimé par un rapport module élastique G' :module visqueux G" d'au moins 1,
et dans lequel la portion de concentré sous emballage est telle que le concentré a un poids, hors emballage, de 10 g à 10 kg.

20. Concentré selon la revendication 19 comprenant en outre 1-30 %, de préférence 1-15 %, en poids du concentré sous emballage total, d'une huile et/ou d'une graisse émulsifiée.

21. Concentré selon les revendications 19 ou 20, dans lequel le bouillon concentré donne un bouillon par dilution dudit bouillon concentré avec un liquide aqueux sous application de chaleur dans un rapport de 1:15-1:50.

22. Procédé de préparation d'un concentré pour préparer un bouillon, un potage, une soupe, une sauce, un fond de viande ou à utiliser comme assaisonnement, ledit concentré comprenant :
- 20-80 % d'eau, en % en poids sur la base du concentré sous emballage total,
- 0,5-60 % en poids d'herbes aromatiques, de légumes, de fruits, de viande, de poisson, de crustacés, ou de particules de ceux-ci, en % en poids sur la base du concentré sous emballage total,
- un système de gélification comprenant une combinaison d'amidon en une quantité de 0,1 à 10 %, en % en poids sur la base de la teneur en eau du concentré, de préférence 1-7 %, plus préférablement 3-6 %, et de gélatine en une quantité de 1,5-30 %, en % en poids sur la base de la teneur en eau du concentré, de préférence 6-20 %, plus préférablement 12-20 %, dans lequel la concentration du système de gélification doit être calculée en (quantité de système de gélification)/(quantité de système de gélification + humidité totale),
- 15-30 %, en % en poids sur la base de la teneur en eau du concentré, plus préférablement 15-26 % de sel, où la concentration de sel doit être calculée en (quantité de sel) / (quantité de sel + humidité totale),
dans lequel le concentré a l'aspect d'un gel, le procédé comprenant les étapes de mélange des ingrédients avec l'eau, remplissage de l'emballage et fermeture des paquets, avec, de préférence une étape de chauffage avant, pendant ou après remplissage de l'emballage.

23. Procédé selon la revendication 22, dans lequel au moins une partie de l'étape de chauffage s'effectue à une température d'au moins 70 °C.

24. Utilisation d'un concentré selon les revendications 1-21, pour préparer un bouillon ou une soupe.

25. Utilisation selon la revendication 24, dans laquelle le concentré est un bouillon concentré qui donne un bouillon par dilution dudit bouillon concentré avec un liquide aqueux sous application de chaleur, ledit bouillon concentré comprenant :
- 20-80 % d'eau, en % en poids sur la base du concentré sous emballage total,
- 0,5-60 % en poids d'herbes aromatiques, de légumes, de fruits, de viande, de poisson, de crustacés, ou de particules de ceux-ci, en % en poids sur la base du concentré sous emballage total,
- un système de gélification comprenant une combinaison d'amidon en une quantité de 1-7 %, en % en poids sur la base de la teneur en eau du concentré, plus préférablement 3-6 %, et de gélatine en une quantité de 6-20 %, en % en poids sur la base de la teneur en eau du concentré, plus préférablement 12-20 %, dans lequel la concentration du système de gélification doit être calculée en (quantité de système de gélification)/(quantité de système de gélification + humidité totale),
- 15-30 %, en % en poids sur la base de la teneur en eau du concentré, plus préférablement 15-26 % de sel, où la concentration de sel doit être calculée en (quantité de sel) / (quantité de sel + humidité totale),
et dans laquelle le concentré a l'aspect d'un gel, exprimé par un rapport module élastique G' :module visqueux G" d'au moins 1,
et dans laquelle la portion de concentré sous emballage est telle que le concentré a un poids, hors emballage, de 10 à 250 g.

26. Utilisation selon la revendication 25, dans laquelle le bouillon concentré comprend en outre de 1-30 %, de préférence 1-15 %, en poids du concentré sous emballage total, d'une huile et/ou d'une graisse émulsifiée.

27. Utilisation selon les revendications 25 ou 26, dans laquelle le bouillon concentré donne un bouillon par dilution dudit bouillon concentré avec un liquide aqueux sous application de chaleur dans un rapport de 1:15 à 1:50.

28. Procédé de préparation d'un bouillon comprenant l'étape de dilution d'un concentré selon l'une quelconque des revendications 1 à 21, dans lequel ledit concentré est dilué avec un liquide aqueux sous application de chaleur.

29. Procédé selon la revendication 28, dans lequel ledit concentré est dilué dans un rapport de 1:15-1:50.
